# EUROPÄISCHE PATENTANMELDUNG

(11) **EP 4 361 194 A1**
(43) Veröffentlichungstag der Anmeldung: **01.05.2024**
(21) Anmeldenummer: 22204771.4
(22) Anmeldetag: 31.10.2022
(51) Int. Cl.: C08G 59/50, C09J 163/00

(54) **KLEBSTOFF ZUM VERKLEBEN VON MEMBRANEN AUS WEICH-PVC**

(71) Anmelder: Sika Technology AG, 6340 Baar (CH)
(72) Erfinder: GÖSSI, Matthias, 8610 Uster (CH); XU-RABL, Rui, Zürich, 8049 (CN); STADELMANN, Ursula, 8046 Zürich (CH); MAYER, Christoph, 76227 Karlsruhe (DE)
(74) Vertreter: Sika Patent Attorneys

(57) **Zusammenfassung**

Gegenstand der Erfindung ist die Verwendung eines Epoxidharz-Klebstoffs zum Verkleben einer Membran aus Weich-PVC mit einem weiteren Substrat, wobei die Härter-Komponente des Klebstoffs mindestens ein Amin **A1** mit mindestens einer Dimethylaminogruppe und mindestens einem Aminwasserstoff, und mindestens ein weiteres Amin **A2** mit mindestens drei Aminwasserstoffen umfasst, und die Härter-Komponente bezogen auf die Summe aller in der Härter-Komponente enthaltenen flüssigen oder gelösten Bestandteile einen Gehalt an Aminen **A1** von 10 bis 45 Gewichts-% aufweist.

Die erfindungsgemässe Verwendung ermöglicht das Verkleben von unbehandelten Membranen aus Weich-PVC unter Ausbildung eines stabilen, wasserbeständigen Klebeverbundes und ist besonders geeignet für das Abdichten von Tunnels, Fundamenten und Dächern.

## Beschreibung

### Technisches Gebiet

Die Erfindung betrifft das Verkleben von Abdichtungsmembranen aus Weich-PVC mit Klebstoffen auf Epoxidharz-Basis.

### Stand der Technik

Kunststoffmembranen für das Abdichten von Fundamenten, Entwässerungssystemen, unterirdischen Schächten, Tunnels oder Dächern bestehen oft aus Weich-PVC. Um eine abdichtende Fläche zu erhalten, werden Membranen in sich überlappenden Bahnen ausgelegt und diese mit einem geeigneten Verfahren miteinander verbunden. Membranen aus Weich-PVC werden meist in Bahnen verlegt und zum Verbinden der Bahnen üblicherweise verschweisst. Dabei wird die untenliegende Membran mit Heissluft soweit erhitzt, dass das PVC angeschmolzen wird, und mit der obenliegenden Membran verpresst, so dass die beiden Membranen nach dem Erkalten mit einer Schweissnaht verbunden sind. Um eine dichte Fläche zu erhalten, werden meist Doppelnähte geschweisst, die mittels Druckluft auf Leckstellen überprüft werden können. Diese Vorgehensweise ist recht aufwändig und bei gewissen beschichteten Membranen nicht möglich. Alternativ zum Schweissen können Membranen auch verklebt werden. Im Tunnelbau oder beim Abdichten von Fundamenten werden die Membranen ausserdem zusätzlich mit dem Bauwerk verklebt, typischerweise auf ein Beton- oder Mörtelsubstrat. Das Verkleben von Membranen aus Weich-PVC mit Klebstoffen gemäss dem Stand der Technik ist aber unbefriedigend, da diese auf Weich-PVC nur schwach haften und/oder sich mit der Zeit wieder ablösen.

Die im Bauwesen für unterschiedlichste Anwendungen eingesetzten Epoxidharz-Klebstoffe sind im Allgemeinen dauerhaft beständig gegenüber dem Einfluss von Feuchtigkeit und entwickeln hohe Haftkräfte auf verschiedensten Substraten wie Beton, Mörtel, Stahl oder Glasfaser oder Kohlefaser verstärkten Kompositwerkstoffen. Auf unbehandeltem Weich-PVC zeigen sie typischerweise aber eine ungenügende Haftung.

Um eine gute Haftung mit Epoxidharz-Klebstoffen zu erzielen, können PVC-Membranen mittels einer haftungsfördernden Beschichtung vorbehandelt werden, oder es werden speziell beschichtete Membranstreifen eingesetzt, welche mit Epoxidharz-Klebstoffen verklebt werden können. Solche speziell beschichtete Membranstreifen werden an die PVC-Membran geschweisst, um ein Verkleben der Membran mit dem Untergrund zu ermöglichen. Dieses Vorgehen ist aber sehr aufwändig und es wäre somit vorteilhaft, über Klebstoffe zu verfügen, welche eine dauerhafte und gegenüber dem Einfluss von Feuchtigkeit beständige Verklebung von nicht speziell vorbehandelte Membranen aus Weich-PVC ermöglichen.

Aus dem Stand der Technik ist die Verwendung von Dimethylaminogruppen-haltigen Aminen wie 3-(3-Dimethylaminopropylamino)propylamin als Cohärter für Epoxidharze zur Erreichung hoher Druckfestigkeiten bekannt, beispielsweise aus EP 3,336,120.

### Darstellung der Erfindung

Aufgabe der vorliegenden Erfindung ist es daher, einen Klebstoff zum Verkleben von Membranen aus Weich-PVC zur Verfügung zu stellen, der auch ohne aufwändige Vorbehandlung oder Beschichtung der Membran einen langlebigen, belastbaren Klebeverbund mit hoher Beständigkeit gegenüber dem Einfluss von Wärme und Feuchtigkeit ermöglicht.

Überraschenderweise wird diese Aufgabe mit der Verwendung eines Klebstoffs gemäss Anspruch 1 gelöst. Der dabei eingesetzte Epoxidharz-Klebstoff umfasst eine Härter-Komponente enthaltend mindestens ein Amin **A1** mit mindestens einer Dimethylaminogruppe und mindestens einem Aminwasserstoff, und mindestens ein weiteres Amin **A2** mit mindestens drei Aminwasserstoffen, wobei der Gehalt an Aminen **A1** 10 bis 45 Gewichts-%, bevorzugt 15 bis 40 Gewichts-%, bezogen auf die Summe aller in der Härter-Komponente enthaltenen flüssigen oder gelösten Bestandteile beträgt. Überraschenderweise ermöglicht eine solche Kombination von Aminen eine gute Haftung zu unbehandelten Membranen aus Weich-PVC bei gleichzeitig hoher Beständigkeit der Verklebung gegenüber dem Einfluss von Feuchtigkeit. Entsprechende Klebstoffe mit geringerem Gehalt an Amin **A1** zeigen eine ungenügende oder keine Haftung auf Weich-PVC, während Klebstoffe mit höherem Gehalt an Amin **A1** Verklebungen mit ungenügender Wasserbeständigkeit ergeben. Weiterhin hat sich gezeigt, dass Amine mit Dimethylaminogruppen, welche frei sind von Aminwasserstoffen, ebenfalls Verklebungen mit ungenügender Wasserbeständigkeit ergeben.

In einer besonders bevorzugte Ausführungsform der Erfindung wird als Amin **A2** eine Kombination aus mindestens einem Amin **A2-1** mit einem Aminwasserstoff-Equivalentgewicht von mindestens 80 g/eq, bevorzugt mindestens 90 g/eq, und einem Amin **A2-2** mit zwei primären Aminogruppen und vier Aminwasserstoffen eingesetzt. Ein solcher Härter ermöglicht emissionsarme Klebstoffe mit hohem Füllstoffgehalt und sehr guter Haftung auf Weich-PVC, welche besonders geeignet sind für das Verkleben von Weich-PVC auf Beton- oder Mörteloberflächen. Dabei sind Kombinationen aus 3-(3-Dimethylaminopropylamino)propylamin als Amin **A1,** Isophorondiamin als Amin **A2-2** und mindestens einem Amin ausgewählt aus Phenalkaminen, Phenalkamiden und aminfunktionellen Addukten von N-Benzyl-1,2-ethandiamin mit Polyepoxiden als Amin **A2-1** besonders geeignet.

Die erfindungsgemässe Verwendung ermöglicht das Verkleben von Membranen aus Weich-PVC mit einer Vielzahl von Substraten, insbesondere mit Beton oder Mörtel wie es beispielsweise im Tunnelbau üblich ist. Insbesondere können auch nicht speziell beschichtete Abdichtungsmembranen aus Weich-PVC ohne weitere Vorbehandlung direkt und dauerhaft mit Beton-, Mörtel- oder weiteren Substratoberflächen verklebt werden. Weiterhin ermöglicht die erfindungsgemässe Verwendung das Verkleben von Membranen aus Weich-PVC untereinander sowie das Verkleben von Membranen aus Weich-PVC mit weiteren Membranen, beispielsweise solchen aus Polyolefin, insbesondere oberflächenmodifiziertem Polyethylen. Der dabei erhaltene Klebeverbund ist stabil und beständig gegenüber Wärme und Feuchtigkeit. Insbesondere weist der Klebeverbund nach einer Lagerung während 28 Tagen bei 70 °C und 100 % relativer Luftfeuchtigkeit eine Schälfestigkeit von mindestens 1 N/mm, bevorzugt mindestens 1.5 N/mm, auf.

Weitere Aspekte der Erfindung sind Gegenstand weiterer unabhängiger Ansprüche. Besonders bevorzugte Ausführungsformen der Erfindung sind Gegenstand der abhängigen Ansprüche.

**Wege zur Ausführung der Erfindung** Gegenstand der Erfindung ist die Verwendung eines Klebstoffs zum Verkleben einer Membran aus Weich-PVC mit einem weiteren Substrat, dadurch gekennzeichnet, dass der Klebstoff
- eine Harz-Komponente enthaltend mindestens ein Epoxidharz und
- eine Härter-Komponente enthaltend
   (a) mindestens ein Amin **A1** mit mindestens einer Dimethylaminogruppe und mindestens einem Aminwasserstoff, und
   (b) mindestens ein weiteres Amin **A2** mit mindestens drei Aminwasserstoffen, welches frei ist von Dimethylaminogruppen,
umfasst, wobei die Härter-Komponente bezogen auf die Summe aller in der Härter-Komponente enthaltenen flüssigen oder gelösten Bestandteile einen Gehalt an Aminen **A1** von 10 bis 45 Gewichts-% aufweist.

Als "Membran" wird eine biegbare Folie aus Kunststoff bezeichnet, wie sie typischerweise für das Abdichten von unterirdischen Bauwerken, Tunnels oder Dächern eingesetzt wird.

Als "Weich-PVC" wird ein flexibler, Weichmacher-haltiger Kunststoff aus Polyvinylchlorid bezeichnet.

Als "Dimethylaminogruppe" wird eine Aminogruppe der Formel 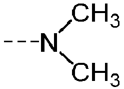 bezeichnet.

Als "Aminwasserstoff" werden die Wasserstoffatome von primären und sekundären Amingruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet. Es wird angegeben in der Masseinheit "g/eq".

Die "Summe aller in der Härter-Komponente enthaltenen flüssigen oder gelösten Bestandteile" bezieht sich auf die Härter-Komponente nach Abzug der gegebenenfalls darin enthaltenen Feststoffe, insbesondere Füllstoffe.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/eq".

Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.

Als "Topfzeit" eines Klebstoffs wird die maximale Zeitspanne ab dem Mischen der Komponenten und der Applikation des Klebstoffs bezeichnet, in der der vermischte Klebstoff in einem ausreichend fliessfähigen Zustand ist und die Substratoberflächen gut benetzen kann.

Als "Offenzeit" eines Klebstoffs wird die für eine kraftschlüssige Verbindung maximal mögliche Zeitspanne zwischen der Applikation des Klebstoffs und dem Fügen der zu verklebenden Teile bezeichnet.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen, sofern nicht anders angegeben.

Gewichtsprozente (Gewichts-%) bezeichnen Massenanteile eines Bestandteils einer Zusammensetzung bezogen auf die gesamte Zusammensetzung, falls nichts anderes angegeben ist. Die Begriffe "Masse" und "Gewicht" werden im vorliegenden Dokument synonym benutzt.

Die Harz- und die Härter-Komponente des Klebstoffs werden separat voneinander in getrennten Gebinden gelagert und erst kurz vor oder während der Applikation miteinander vermischt.

Ein geeignetes Epoxidharz wird auf bekannte Art und Weise erhalten, insbesondere aus der Oxidation von Olefinen oder aus der Reaktion von Epichlorhydrin mit Polyolen, Polyphenolen oder Aminen.

Bevorzugt sind aromatische Epoxidharze, insbesondere die Glycidylether von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan,
- Dihydroxybenzol-Derivaten wie Resorcin, Hydrochinon oder Brenzkatechin,
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)-ethan, Bis(4-hydroxyphenyl)ether oder Bis(4-hydroxyphenyl)sulfon,
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind,
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A, -F oder-A/F Flüssigharz, beziehungsweise die Glycidylisierungsprodukte von hydriertem Bisphenol-A, -F oder-A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Weitere geeignete Epoxidharze sind solche aus der Umsetzung von biobasierten hydroxyfunktionellen Rohstoffen mit Epichlorhydrin, insbesondere Vanillin-basierte Epoxidharze wie insbesondere Diglycidylether von Vanillinalkohol, oder Glycerolbasierte Epoxidharze.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25°C bezeichnet.

Gegebenenfalls enthält die Harz-Komponente zusätzlich Anteile von Epoxid-Festharz.

Besonders bevorzugt enthält die Harz-Komponente mindestens ein aromatisches Epoxid-Flüssigharz, insbesondere ein Bisphenol A-Diglycidylether, ein Bisphenol F-Diglycidylether oder ein Phenol-Formaldehyd Novolak-Glycidylether, wobei der Phenol-Formaldehyd Novolak-Glycidylether bevorzugt eine mittlere Funktionalität im Bereich von 2.3 bis 4, bevorzugt 2.5 bis 3, aufweist. Diese Epoxidharze sind sehr hydrophob und weisen eine für Epoxidharze niedrige Viskosität auf. Sie ermöglichen eine gute Verarbeitbarkeit, eine schnelle Aushärtung und hohe Haftkräfte.

Bevorzugt weist das aromatische Epoxid-Flüssigharz ein mittleres Epoxid-Equivalentgewicht von 150 bis 250 g/eq auf.

Bevorzugt enthält die Harz-Komponente zusätzlich mindestens einen Epoxidgruppen-haltigen Reaktivverdünner.

Dafür geeignet sind insbesondere 1,4-Butandioldiglycidylether, 1,6-Hexandioldiglycidylether, Trimethylolpropandi- oder -triglycidylether, Phenylglycidylether, Kresylglycidylether, Guajacolglycidylether, 4-Methoxyphenylglycidylether, p-n-Butylphenylglycidylether, p-tert. Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylglycidylether.

Bevorzugt als Reaktivverdünner ist 1,4-Butandioldiglycidylether, 1,6-Hexandioldiglycidylether, p-tert.Butylphenylglycidylether, Cardanolglycidylether oder C₈- bis C₁₀- oder C₁₂- bis C₁₄- oder C₁₃- bis C₁₅-Alkylglycidylether.

Besonders bevorzugt ist 1,4-Butandioldiglycidylether und/oder 1,6-Hexandioldiglycidylether. Ein solcher Klebstoff ermöglicht besonders hohe Haftkräfte mit Membranen aus Weich-PVC bei guter Wasserfestigkeit der Verklebung.

Bevorzugt liegt das Gewichtsverhältnis zwischen aromatischen Epoxid-Flüssigharzen und Epoxidgruppen-haltigen Reaktivverdünnern im Bereich von 60/40 bis 95/5, insbesondere 70/30 bis 95/10.

Die Härter-Komponente enthält mindestens ein Amin **A1** mit mindestens einer Dimethylaminogruppe und mindestens einem Aminwasserstoff. Ein solches Amin ermöglicht eine besonders gute Haftung auf Weich-PVC und wird bei der Aushärtung des Klebstoffs ins Polymernetzwerk eingebunden.

Bevorzugt ist das Amin **A1** ausgewählt aus der Gruppe bestehend aus 2-Dimethylaminoethylamin, 3-Dimethylaminopropylamin (DMAPA), 4-Dimethylaminobutylamin, 6-Dimethylaminohexylamin, 2-(2-Dimethylaminoethylamino)ethylamin, 2-(3-Dimethylaminopropylamino)ethylamin, 3-(2-Dimethylaminoethylamino)propylamin, 3-(3-Dimethylaminopropylamino)propylamin (DMAPAPA), N-(3-Dimethylaminopropyl)-1,3-bis(aminomethyl)benzol, N-(3-Dimethylaminopropyl)-1,4-bis-(aminomethyl)benzol, 2,4,6-Tris(4-dimethylamino-2-azabutyl)phenol, Bis(2-dimethylaminoethyl)amin, Bis(3-dimethylaminopropyl)amin und Bis(6-dimethylaminohexyl)amin.

Bevorzugt enthält das Amin **A1** mindestens zwei Aminwasserstoffe, insbesondere mindestens drei Aminwasserstoffe.

Am meisten bevorzugt als Amin **A1** ist 3-(3-Dimethylaminopropylamino)propylamin (DMAPAPA). Es ist geruchsarm, toxikologisch vorteilhaft, kommerziell gut verfügbar und ermöglicht sehr hohe Haftkräfte bei guter Wasserbeständigkeit der Verklebung.

Weiterhin bevorzugt als Amin **A1** ist 3-Dimethylaminopropylamin (DMAPA). Es weist eine besonders hohe Konzentration an Dimethylaminogruppen auf und ist kommerziell gut verfügbar.

Weiterhin bevorzugt als Amin **A1** ist N-(3-Dimethylaminopropyl)-1,3-bis(aminomethyl)benzol. Es ist besonders geruchsarm, erhältlich aus der reduktiven Alkylierung von 3-Dimethylaminopropylamin mit 3-Cyanobenzaldehyd und ermöglicht besonders hohe Haftkräfte bei guter Wasserbeständigkeit der Verklebung.

Bevorzugt enthält der Klebstoff eine solche Menge an Amin **A1,** dass die Härter-Komponente bezogen auf die Summe aller in der Härter-Komponente enthaltenen flüssigen oder gelösten Bestandteile einen Gehalt an Aminen **A1** von 15 bis 40 Gewichts-% aufweist. Gegebenenfalls in der Härter-Komponente enthaltene Füllstoffe sind dabei also nicht mitgerechnet. Eine solche Menge an Amin **A1** ermöglicht eine besonders vorteilhafte Kombination aus hoher Haftkraft und guter Wasserbeständigkeit der Verklebung.

Weiterhin bevorzugt enthält der Klebstoff eine solche Menge an Amin **A1,** dass die Anzahl Aminwasserstoff-Equivalente aus Aminen **A1** bezogen auf die gesamte Anzahl Aminwasserstoff-Equivalente in der Härter-Komponente im Bereich von 20 bis 60 %, bevorzugt 25 bis 55 %, liegt. Eine solche Menge an Amin **A1** ermöglicht eine besonders vorteilhafte Kombination aus hoher Haftkraft und guter Wasserbeständigkeit der Verklebung.

Die Härter-Komponente enthält mindestens ein weiteres Amin **A2** mit mindestens drei Aminwasserstoffen, welches frei ist von Dimethylaminogruppen. Ein solches Amin ermöglicht eine hohe Festigkeit der Verklebung bei guter Beständigkeit gegenüber den Einfluss von Feuchtigkeit.

Geeignet als Amin **A2** sind handelsübliche Polyamine mit aliphatisch gebundenen Aminogruppen, wie sie üblicherweise zum Aushärten von Epoxidharzen eingesetzt werden.

Bevorzugt ist das Amin **A2** ausgewählt aus der Gruppe bestehend aus 1,5-Diamino-2-methylpentan (MPMD), 1,6-Hexandiamin, 2,2(4),4-Trimethyl-1,6-hexandiamin (TMD), 2-Butyl-2-ethyl-1,5-pentandiamin (C11-Neodiamin), Isophorondiamin (IPDA), 1,3-Bis(aminomethyl)benzol (MXDA), 1,4-Bis(aminomethyl)benzol, 2,5-Bis(aminomethyl)furan, 2,5-Bis(aminomethyl)tetrahydrofuran, 1,3-Bis(aminomethyl)cyclohexan (BAC), 1,4-Bis(aminomethyl)cyclohexan, Bis(4-aminocyclohexyl)methan, 1,2-Diaminocyclohexan (DACH), 1,3-Diaminocyclohexan, 1,4-Diaminocyclohexan, 2(4)-Methyl-1,3-diaminocyclohexan (MCDA), 2,5(2,6)-Bis-(aminomethyl)bicyclo[2.2.1]heptan (NBDA), N-Benzyl-1,2-ethandiamin, N-Furfuryl-1,2-ethandiamin, N-Tetrahydrofurfuryl-1,2-ethandiamin, Diethylentriamin (DETA), Triethylentetramin (TETA), Tetraethylenpentamin (TEPA), Dipropylentriamin (DPTA), N-(2-Aminoethyl)-1,3-propandiamin (N3-Amin), N,N'-Bis(3-aminopropyl)-ethylendiamin (N4-Amin), Bis(1,6-hexylen)triamin (BHMT), Phenalkaminen, Phenalkamiden, Polyamidoaminen, aminfunktionellen Addukten der genannten Amine mit Epoxiden, und Kombinationen aus zwei oder mehr dieser Amine.

Als Phenalkamine geeignet sind insbesondere Umsetzungsprodukte von Cardanol mit Formaldehyd und Polyaminen. Als Phenalkamide geeignet sind insbesondere Phenalkamine, welche zusätzlich Amidgruppen enthalten. Als Polyamidoamine geeignet sind insbesondere Umsetzungsprodukte aus Dimerfettsäuren mit Polyalkylenaminen wie insbesondere DETA, TETA oder TEPA.

Besonders bevorzugt ist IPDA, MXDA, BAC, DACH, MCDA, N-Benzyl-1,2-ethandiamin, aminfunktionelle Addukte von N-Benzyl-1,2-ethandiamin mit Polyepoxiden, DETA, TETA, TEPA, DPTA, N3-Amin, N4-Amin, Phenalkamine, Phenalkamide sowie Kombinationen aus zwei oder mehr dieser Amine.

Besonders bevorzugt ist IPDA.

Weiterhin besonders bevorzugt ist N-Benzyl-1,2-ethandiamin.

Weiterhin besonders bevorzugt sind aminfunktionelle Addukte von N-Benzyl-1,2-ethandiamin mit mindestens einem Polyepoxid, insbesondere einem aromatischen Epoxid-Flüssigharz. Diese Addukte sind besonders niedrigviskos, auch ohne Lösemittel oder Verdünner in hoher Konzentration herstellbar und ermöglichen eine hohe Wasserbeständigkeit der Verklebung.

Weiterhin besonders bevorzugt sind Phenalkamine oder Phenalkamide, insbesondere lösemittelfreie Phenalkamine oder Phenalkamide, wie sie von der Firma Cardolite kommerziell vertrieben werden, insbesondere Phenalkamide wie Cardolite^{®} LITE 3025, LITE 3040 oder LITE 3060 (alle von Cardolite).

In einer bevorzugten Ausführungsform enthält die Härter-Komponente als Amin **A2** mindestens ein Amin **A2-1** mit einem Aminwasserstoff-Equivalentgewicht von mindestens 80 g/eq, bevorzugt mindestens 90 g/eq. Ein solches Amin ermöglicht Klebstoffe mit hohem Füllstoffgehalt und geringem Gehalt an Verdünnern. Besonders geeignet als Amin **A2-1** ist ein Phenalkamin oder Phenalkamid oder ein aminfunktionelles Addukt von N-Benzyl-1,2-ethandiamin mit mindestens einem Polyepoxid, insbesondere einem aromatischen Epoxid-Flüssigharz. Diese Amine sind hydrophob, vergleichsweise niedrigviskos und ermöglichen emissionsarme Klebstoffe mit hoher Beständigkeit gegenüber Feuchtigkeit.

In einer besonders bevorzugten Ausführungsform enthält die Härter-Komponente als Amin **A2** eine Kombination aus mindestens einem Amin **A2-1** wie vorgängig beschrieben und mindestens einem Amin **A2-2** mit zwei primären Aminogruppen und vier Aminwasserstoffen.

Bevorzugt ist das Amin **A2-2** ausgewählt aus IPDA, MXDA, BAC, DACH und MCDA, wobei IPDA am meisten bevorzugt ist.

In der am meisten bevorzugten Ausführungsform enthält die Härter-Komponente eine Kombination aus 3-(3-Dimethylaminopropylamino)propylamin (DMAPAPA), Isophorondiamin (IPDA) und mindestens einem Amin ausgewählt aus Phenalkaminen, Phenalkamiden und aminfunktionellen Addukten von N-Benzyl-1,2-ethandiamin mit mindestens einem aromatischen Epoxid-Flüssigharz.

Die bevorzugten Amine und Mengen ermöglichen Klebstoffe mit besonders hohen Haftkräften bei hoher Beständigkeit der Verklebung gegenüber Feuchtigkeit.

Bevorzugt enthält der Klebstoff weitere Inhaltsstoffe, wobei diese als Bestandteil der Harz- und/oder der Härter-Komponente und/oder als weitere separate Komponente vorhanden sind. Gegenüber Aminwasserstoffen reaktive Bestandteile liegen bevorzugt als Bestandteil der Harz-Komponente vor. Gegenüber Epoxidgruppen reaktive Bestandteile liegen bevorzugt als Bestandteil der Härter-Komponente vor.

Bevorzugt enthält der Klebstoff mindestens einen weiteren Inhaltsstoff ausgewählt aus Verdünnern, Füllstoffen, Beschleunigern und oberflächenaktiven Verbindungen.

Als Verdünner geeignet sind insbesondere solche mit einem Siedepunkt von mindestens 200 °C bei Normaldruck, insbesondere 2-Phenoxyethanol, 2-Benzyloxyethanol, Benzylalkohol, Ethylenglykoldibutylether, Ethylenglykoldiphenylether, Diethylenglykol, Diethylenglykolmonoethylether, Diethylenglykolmono-n-butylether, Diethylenglykoldi-n-butylylether, Propylenglykolphenylether, Dipropylenglykol, Dipropylenglykoldi-n-butylether, Diphenylmethan, Diisopropylnaphthalin, propyliertes Biphenyl, tert.Butylphenol, Nonylphenol, Dodecylphenol, Cardanol (aus Cashewschalen-Öl, enthaltend als Hauptbestandteile 3-(7-Pentadecenyl)phenol, 3-(7,10,14-Pentadecatrienyl)phenol und 3-(7,10-Pentadecadienyl)phenol), styrolisiertes Phenol, Bisphenole, aromatische Kohlenwasserstoffharze, insbesondere Phenolgruppen-haltige Typen, Adipate, Sebacate, Phthalate, Benzoate, organische Phosphor- oder Sulfonsäureester oder Sulfonamide.

Bevorzugt sind Benzylalkohol, styrolisiertes Phenol, ethoxyliertes Phenol wie insbesondere 2-Phenoxyethanol, phenolgruppenhaltige aromatische Kohlenwasserstoffharze, insbesondere die Novares^{®}-Typen LS 500, LX 200, LA 300 oder LA 700 (von Rütgers), Diisopropylnaphthalin, propyliertes Biphenyl oder Cardanol.

Bevorzugt enthält der Klebstoff nur einen geringen Gehalt an Verdünnern. Bevorzugt enthält der Klebstoff bezogen auf 100 Gewichtsteile der Summe aller Epoxid- und Amingruppen-haltigen Bestandteile höchstens 30 Gewichtsteile, bevorzugt höchstens 20 Gewichtsteile, besonders bevorzugt höchstens 10 Gewichtsteile, insbesondere höchstens 5 Gewichtsteile, Verdünner. Dies ermöglicht Verklebungen mit besonders hoher Beständigkeit gegenüber Feuchtigkeit.

Geeignete Füllstoffe sind insbesondere gemahlene oder gefällte Calciumcarbonate, welche gegebenenfalls mit Fettsäure, insbesondere Stearaten, beschichtet sind, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln.

Bevorzugt enthält der Klebstoff mineralische Füllstoffe, insbesondere ausgewählt aus Calciumcarbonat, Baryt, Talk, Quarzmehl, Quarzsand, Kaolin und Kombinationen dieser Füllstoffe.

Bevorzugt enthält der Klebstoff bezogen auf den gesamten Klebstoff 60 bis 90 Gewichts-%, insbesondere 70 bis 85 Gewichts-%, mineralische Füllstoffe.

Geeignete Beschleuniger sind insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren oder Säureester; weiterhin Nitrate wie insbesondere Calciumnitrat; tertiäre Amine, Imidazole, Ammoniumsalze, Amidine, Guanidine, Phenole, Phenol-Harze oder Mannich-Basen wie insbesondere 2,4,6-Tris(dimethylaminomethyl)phenol, oder Mercaptogruppen aufweisende Verbindungen.

Bevorzugt sind Säuren, Nitrate, tertiäre Amine oder Mannich-Basen, insbesondere Salicylsäure, Calciumnitrat oder 2,4,6-Tris(dimethylaminomethyl)phenol oder eine Kombination dieser Beschleuniger.

Geeignete oberflächenaktive Verbindungen sind insbesondere Verdicker, Netzmittel, Entschäumer oder Entlüfter.

Der Klebstoff ist bevorzugt nicht wasserbasiert. Er enthält bevorzugt weniger als 5 Gewichts-%, insbesondere weniger als 1 Gewichts-%, Wasser bezogen auf den gesamten Klebstoff.

Gegebenenfalls enthält der Klebstoff weitere Hilfs- und Zusatzstoffe, wie insbesondere
- weitere Reaktivverdünner, insbesondere epoxidiertes Sojaöl oder Leinöl, Acetoacetatgruppen aufweisende Verbindungen, Butyrolakton, Carbonate, Aldehyde, Isocyanate oder Reaktivgruppen aufweisende Silikone,
- Lösemittel,
- weitere Amine, insbesondere aromatische Polyamine wie insbesondere 4,4'-, 2,4' und/oder 2,2'-Diaminodiphenylmethan, 2,4- und/oder 2,6-Toluendiamin, 3,5-Dimethylthio-2,4- und/oder -2,6-toluendiamin, 3,5-Diethyl-2,4- und/oder - 2,6-toluendiamin,
- weitere Dimethylaminogruppen aufweisende Verbindungen, insbesondere (Meth)acrylamide wie insbesondere 3-Dimethylaminopropylmethacrylamid,
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol,
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine,
- Fasern, insbesondere Glasfasern, Kohlefasern, Metallfasern, Keramikfasern, Kunststofffasern wie Polyamidfasern oder Polyethylenfasern oder biobasierte Fasern wie insbesondere Holzfasern, Zellulosefasern, Hanffasern, Flachs (Leinen), Jute oder Kokosfasern,
- Nanofüllstoffe, insbesondere Carbon Nanotubes,
- Pigmente, insbesondere Titandioxid, Eisenoxide oder Chrom(III)oxid,
- Haftvermittler, insbesondere Organoalkoxysilane,
- flammhemmende Substanzen oder
- weitere Additive, insbesondere Stabilisatoren gegen Oxidation, Wärme, Licht oder UV-Strahlung oder Biozide.

Ein bevorzugter Klebstoff für die erfindungsgemässe Verwendung enthält bezogen auf den gesamten Klebstoff
- 10 bis 20 Gewichts-% aromatische Epoxid-Flüssigharze,
- 1 bis 4 Gewichts-% Epoxidgruppen-haltige Reaktivverdünner,
- 3-(3-Dimethylaminopropylamino)propylamin,
- Isophorondiamin,
- mindestens ein Amin **A2-1** mit einem Aminwasserstoff-Equivalentgewicht von mindestens 80 g/eq, bevorzugt mindestens 90 g/eq,
- 60 bis 90 Gewichts-% mineralische Füllstoffe und gegebenenfalls weitere Inhaltsstoffe.

Dabei sind die Epoxidharze und die Epoxidgruppen-haltigen Reaktivverdünner ein Bestandteil der Harz-Komponente, die Amine ein Bestandteil der Härter-Komponente und die mineralischen Füllstoffe und gegebenenfalls vorhandene weitere Bestandteile sind ein Bestandteil der Harz- und/oder der Härter-Komponente oder können als eigene, weitere Komponente vorhanden sein.

Als Membran aus Weich-PVC für die erfindungsgemässe Verwendung geeignet sind handelsübliche Membranen, wie sie zum Abdichten von Tunnels, Fundamenten, Brücken, Dächern, Silos, Schwimmbecken, Klärbecken, Teichen oder Tanks verwendet werden. Sie bestehend weitgehend aus Weichmacher-haltigem Polyvinylchlorid, typischerweise mit Weichmachergehalten von 20 bis 50 Gewichts-% bezogen auf die gesamte Membran. Sie weisen insbesondere eine Dicke von 1 bis 5 mm auf und sind üblicherweise in Form von aufgerollten Bahnen in einer Breite von etwa 0.2 bis 3 m erhältlich. Für die Verwendung werden sie typischerweise auf das gewünschte Mass zugeschnitten und/oder mittels Heissluftschweissen untereinander verbunden.

Die Membran aus Weich-PVC kann zur Verstärkung ein innenliegendes Polyestergewebe oder Glasfaservlies enthalten.

Einige handelsübliche Membranen aus Weich-PVC weisen eine optisch unterschiedliche Oberseite und Unterseite auf. Im Fall von Membranen, die untertags eingesetzt werden, beispielsweise zum Abdichten von Tunnels oder Fundamenten, sind die Oberseite und die Unterseite typischerweise unterschiedlich pigmentiert, um eine bessere Übersicht beim Verlegen der Bahnen zu behalten. Sikaplan^{®} WP 2110-21 HL (von Sika) beispielsweise weist eine gelb pigmentierte Oberseite und eine schwarz pigmentierte Unterseite auf, wobei die schwarz pigmentierte Unterseite auf das abzudichtende Substrat zu liegen kommt.

Auch Membranen für die Dachabdichtung weisen typischerweise eine unterschiedlich gefärbte Oberseite und Unterseite auf. Bei gewissen Membranen für die Dachabdichtung ist die Oberseite mit einer besonders Licht- und UV-stabilen Schicht beschichtet.

Besonders geeignete Membranen aus Weich-PVC für die erfindungsgemässe Verwendung sind die unter dem Markennamen Sikaplan^{®} oder Sarnafil^{®} erhältlichen Produkte von Sika, beispielsweise Sikaplan^{®} WP 1100, Sikaplan^{®} WP 2110, Sarnafil^{®} G 410 (mit UV-stabiler Oberflächenversiegelung), Sarnafil^{®} S 327 (mit UV-stabiler Oberflächenversiegelung), Sikaplan^{®} G, Sikaplan^{®} VG, Sikaplan^{®} SGmA, sowie auch Membranen aus Weich-PVC von weiteren Anbietern.

Es können sowohl die Oberseite als auch die Unterseite der Membran verklebt werden. Typischerweise wird die Unterseite der Membran verklebt.

Ein wesentlicher Aspekt der erfindungsgemässen Verwendung liegt darin, dass es nicht notwendig ist, eine Membran aus Weich-PVC mit einer haftungsfördernden Oberflächenbeschichtung zu einzusetzen, um einen belastbaren Klebeverbund zu erhalten. Insbesondere ist es nicht notwendig, vor der Applikation des Klebstoffs einen Primer oder Aktivator auf die Membran zu applizieren. Weiterhin ist es nicht notwendig, eine spezielle Membran zu verwenden, die zur Verbesserung der Haftung vollflächig oder in Teilbereichen mit einer Oberflächenbeschichtung versehen ist, wie das beispielsweise im Fall von Sikaplan^{®} WP Tape-200 (von Sika) der Fall ist.

Somit weist die Membran aus Weich-PVC für die erfindungsgemässe Verwendung bevorzugt keine haftungsfördernde Oberflächenbeschichtung auf.

Es kann aber vorteilhaft sein, die Membran vor der Verklebung von Staub und Schmutz zu befreien, beispielsweise durch Abblasen, Absaugen oder Abwischen oder Reinigen mit beispielsweise einem Lösemittel. Falls eine nicht verschmutze Membran frisch ab Rolle eingesetzt wird, ist eine solche Reinigung vor der Verwendung typischerweise nicht notwendig.

Als weiteres Substrat für die erfindungsgemässe Verwendung geeignet ist insbesondere
- ein Kunststoff wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Beton, Mörtel, Zementestrich, Faserzement, Backstein, Ziegel, Gips, Natursteine wie Granit oder Marmor, Glas oder Glaskeramik;
- Asphalt oder Bitumen;
- Reparatur- oder Nivelliermassen auf Basis PCC (Polymer-modifizierter Zementmörtel) oder ECC (Epoxidharz-modifizierter Zementmörtel);
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) oder Sheet Moulding Compounds (SMC);
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche, insbesondere mit Polyvinylidenfluorid beschichtete Bleche;
- Beschichtungen, Farben oder Lacke, insbesondere beschichtete Böden.

Das weitere Substrat kann bei Bedarf vor dem Applizieren des Klebstoffs vorbehandelt werden, insbesondere durch physikalische und/oder chemische Reinigungsverfahren oder das Aufbringen eines Aktivators oder eines Primers. Bevorzugt wird es abgesehen von einer oberflächlichen Reinigung, insbesondere Entfernen von Staub, nicht vorbehandelt.

Bevorzugt ist das weitere Substrat ausgewählt aus Weich-PVC, Polyolefin, modifiziertem Polyethylen, Beton, Mörtel, Zementestrich, Faserzement, Backstein, Ziegel, Naturstein, Stahl, mit Polyvinylidenfluorid beschichteten Metallen und weiteren Kunststoffen.

In einer bevorzugten Ausführungsform der Verwendung ist das weitere Substrat eine weitere Membran aus Weich-PVC, oder eine Membran aus einem weiteren Kunststoff wie insbesondere Polyolefin, beispielsweise Sikaplan^{®} WT 1200 (von Sika), oder eine Membran aus modifiziertem Polyethylen wie insbesondere Hypalon^{®}.

In einer besonders bevorzugten Ausführungsform der Verwendung ist das weitere Substrat ein nicht-flexibles Material mit einer festen Oberfläche, insbesondere Beton, Mörtel, Zementestrich, Faserzement, Backstein, Ziegel, Naturstein, Stahl, mit Polyvinylidenfluorid beschichtete Metalle oder weitere Kunststoffe wie Hart-PVC, faserverstärkte Kunststoffe oder SMC, insbesondere Beton, Mörtel oder mit Polyvinylidenfluorid beschichtete Metalle.

Mit Polyvinylidenfluorid beschichtete Metalle sind insbesondere Bleche, im Handel erhältlich als Kynar^{®} 500 (von Arkema) beschichtete Metallbleche, insbesondere für die Dachabdeckung. Der beschriebene Klebstoff weist eine überraschend gute Haftung auf solchen beschichteten Metallblechen auf, was zum Beispiel bei Übergängen von geneigten Dachflächen mit einer Kynar^{®} 500 Metallabdeckung zu flachen, mit PVC-Membran abgedichteten Dachflächen, oder bei Flachdächern mit Kynar^{®} 500 Metallrahmen, besonders vorteilhaft ist, um die beiden Materialien dauerhaft zu verbinden. Die Verwendung des Klebstoffs zum Verkleben einer Membran aus Weich-PVC mit einem Polyvinylidenfluorid beschichteten Metall ist somit besonders bevorzugt.

Für die erfindungsgemässe Verwendung werden die Harz- und die Härter-Komponente und gegebenenfalls vorhandene weitere Komponenten des Klebstoffs mit einer geeigneten Methode vermischt. Das Mischungsverhältnis wird bevorzugt so gewählt, dass das molare Verhältnis der gegenüber Epoxidgruppen reaktiven Gruppen zu den Epoxidgruppen im Bereich von 0.5 bis 1.5, insbesondere 0.7 bis 1.2, liegt. In Gewichtsteilen liegt das Mischungsverhältnis zwischen der Harz- und der Härter-Komponente typischerweise im Bereich von etwa 1:2 bis 20:1, insbesondere 1:1 bis 5:1.

Das Mischen der Komponenten erfolgt kontinuierlich oder batchweise mittels eines geeigneten Verfahrens, wobei darauf zu achten ist, dass zwischen dem Mischen der Komponenten und der Applikation des vermischten Klebstoffs nicht zu viel Zeit vergeht und die Applikation somit innerhalb der Topfzeit des Klebstoffs erfolgt.

Das Mischen und die Applikation des Klebstoffs erfolgen bevorzugt bei Umgebungstemperatur, welche typischerweise im Bereich von etwa 5 bis 40°C, bevorzugt bei etwa 10 bis 35°C, liegt.

Für die erfindungsgemässe Verwendung wird der vermischte Klebstoff innerhalb der Topfzeit auf die Membran aus Weich-PVC und/oder auf das weitere Substrat appliziert.

Die Applikation des Klebstoffs erfolgt bevorzugt von Hand mit einem Spachtelwerkzeug oder einer Maurerkelle. Ebenfalls möglich ist eine Applikation aus einer Kartusche oder mit einer hydraulischen Förderanlage.

Bevorzugt wird der Klebstoff in einer solchen Menge appliziert, dass nach dem Fügen und Verpressen der Substrate die Klebefuge eine Dicke von 0.5 bis 10 mm, bevorzugt von 1 bis 5 mm, aufweist.

Die Membran aus Weich-PVC kann vollflächig oder nur in einem oder mehreren Teilbereichen verklebt werden. Bevorzugt erfolgt die Verklebung in einem oder mehreren Teilbereichen.

Anschliessend an die Applikation des vermischten Klebstoffs wird die Verklebung innerhalb der Offenzeit des Klebstoffs gefügt. Die Topfzeit und die Offenzeit des Klebstoffs hängt von dessen Inhaltsstoffen, dem Vorhandensein von Beschleunigern und der Temperatur ab. Bei Raumtemperatur beträgt die Offenzeit typischerweise etwa 15 Minuten bis etwa 2 Stunden.

Je nach Geometrie der Verklebung ist es vorteilhaft, wenn die Verklebung nach dem Fügen mit einer geeigneten Methode fixiert wird, um ein Verschieben der gefügten Teile zu verhindern, solange der Klebstoff noch zu wenig ausgehärtet ist, um die gefügten Teile in der gewählten Position zu halten.

Nach dem Fügen der Verklebung härtet der Klebstoff aus. Bevorzugt erfolgt die Aushärtung des Klebstoffs ebenfalls bei Umgebungsbedingungen.

Die Aushärtung des Klebstoffs erfolgt durch chemische Reaktion der Inhaltsstoffe. Dabei reagieren die Aminwasserstoffe von primären und sekundären Aminogruppen und gegebenenfalls vorhandene weitere gegenüber Epoxidgruppen reaktive Gruppen mit Epoxidgruppen unter deren Ringöffnung. Weiterhin katalysieren die vorhandenen Dimethylaminogruppen die Homopolymerisation der Epoxidgruppen. Als Ergebnis hauptsächlich dieser Reaktionen polymerisiert der Klebstoff und härtet dadurch aus. Die Aushärtung erstreckt sich typischerweise über einige Stunden bis Tage. Die Dauer hängt unter anderem von der Temperatur, der Reaktivität der Bestandteile, deren Stöchiometrie und der Gegenwart bzw. Menge von Beschleunigern ab.

Ein weiterer Gegenstand der Erfindung ist ein Klebeverbund, erhalten aus der Verwendung wie vorgängig beschrieben.

Bevorzugt weist der Klebeverbund eine Schichtdicke des Klebstoffs von 0.5 bis 10 mm, insbesondere 1 bis 5 mm, auf.

Bevorzugt weist der Klebeverbund einen Wert für die Schälfestigkeit von jeweils mindestens 1 N/mm, bevorzugt mindestens 1.5 N/mm, auf, bestimmt sowohl nach a) 7 Tagen Aushärtung im Normklima, als auch nach b) 7 Tagen Aushärtung im Normklima gefolgt von 28 Tagen Lagerung bei 70 °C und 100 % relativer Feuchtigkeit gefolgt von 3 Tagen Lagerung im Normklima.

Für den Fall, dass die Membran aus Weich-PVC mit einer weiteren Membran verklebt ist, erfolgt die Bestimmung der Schälfestigkeit gemäss DIN EN 14173 bei einer Zuggeschwindigkeit von 100 mm/min.

Für den Fall, dass die Membran aus Weich-PVC mit einer festen Oberfläche verklebt ist, erfolgt die Bestimmung der Schälfestigkeit in Anlehnung an DIN EN 14173 bei einer Zuggeschwindigkeit von 100 mm/min mit einem Zugwinkel von 90° zwischen der Membran aus Weich-PVC und der festen Oberfläche.

Bevorzugt ist der erhaltene Klebeverbund Teil einer Abdichtung von Tunnels, Fundamenten, Archivräumen, Serviceräumen, Sportstadien, U-Bahn Stationen, Unterführungen, Militäreinrichtungen, Teichen, Schwimmbädern, Kläranlagen, Silos, Tanks, Terrassen oder Parkdecks.

Weiterhin bevorzugt ist der erhaltene Klebeverbund Teil einer Dachabdichtung, insbesondere einer Abdichtung von schwach geneigten Dachflächen, insbesondere Flachdächern mit Auflast oder mechanisch befestigen Flachdächern.

Der erhaltene Klebeverbund vermag die verklebten Teile zuverlässig und langlebig zu verbinden und ermöglicht eine zuverlässige Abdichtung gegenüber eindringendem Wasser und gegenüber Gasen wie Methan oder Radon.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Verwendete Substanzen und Abkürzungen:

- BADGE: Bisphenol-A Diglycidylether, EEW ca. 187 g/eq (Araldite^{®} GY 250, von Huntsman)
- BD-DGE: 1,4-Butandioldiglycidylether, EEW ca. 128 g/eq (Grilonit^{®} RV 1806, von EMS-Chemie)
- HD-DGE: 1,6-Hexandioldiglycidylether, EEW ca. 147 g/eq (Grilonit^{®} RV 1812, von EMS-Chemie)
- DY-E: Monoglycidylether von C₁₂- bis C₁₄-Alkoholen, EEW ca. 290 g/eq (Araldite^{®} DY-E, von Huntsman)
- Rütasolv^{®} BP M: propyliertes Biphenyl (von Rütgers)
- DMAPAPA: 3-(3-Dimethylaminopropylamino)propylamin, AHEW 53 g/eq (DMAPAPA, von Arkema)
- DMAPA: 3-Dimethylaminopropylamin, AHEW 51 g/eq (DMAPA, von Arkema)
- DMAP-MXDA: N-(3-Dimethylaminopropyl)-1,3-bis(aminomethyl)benzol, AHEW 73.7 g/eq, hergestellt wie nachfolgend beschrieben
- IPDA: Isophorondiamin, AHEW 42.6 g/eq (Vestamin^{®} IPD, von Evonik)
- LITE 3025: Phenalkamid-Härter, AHEW ca. 103 g/eq (Cardolite^{®} LITE 3025, von Cardolite)
- Addukt-1: Addukt von N-Benzyl-1,2-ethandiamin an Bisphenol A-Diglycidylether, AHEW 116.6 g/eq, hergestellt wie nachfolgend beschrieben
- Quarzmehl: Korngrösse 0 bis 75 µm
- Quarzsand: Korngrösse 0.1 bis 0.3 mm
- coated CaCO₃: gefällte, oberflächenbehandelte Kreide (Winnofil^{®} SPT, von Imerys Performance Minerals)

### DMAP-MXDA: N-(3-Dimethylaminopropyl)-1,3-bis(aminomethyl)benzol

39.2 g (0.30 mol) 3-Formylbenzonitril wurden in 750 ml Isopropylalkohol gelöst, mit 32.0 g (0.315 mol) 3-Dimethylaminopropylamin (DMAPA, von Arkema) vermischt und 1 Stunde gerührt, anschliessend bei 65 °C, 75 bar Wasserstoff-Druck und einem Fluss von 5 ml/min auf einer kontinuierlich arbeitenden Hydrierapparatur mit Raney-Nickel-Festbettkatalysator hydriert und die hydrierte Lösung am Rotationsverdampfer bei 65 °C eingeengt, wobei unreagiertes 3-Dimethylaminopropylamin, Wasser und Isopropanol entfernt wurden. Die so erhaltene Reaktionsmischung wurde bei 130 °C unter Vakuum mittels Destillation gereinigt. Erhalten wurde eine farblose Flüssigkeit mit einem mittels GC bestimmten Gehalt an N-Dimethylaminopropyl-1,3-bis(aminomethyl)benzol von > 97 %, welche im Folgenden als **DMAP-MXDA** eingesetzt wurde.

### Addukt-1:

45.0 g (0.3 mol) N-Benzyl-1,2-ethandiamin wurden unter Stickstoffatmosphäre vorgelegt und auf 80 °C erwärmt. Unter gutem Rühren wurden langsam 36.8 g (0.2 mol Epoxidgruppen) Bisphenol A-Diglycidylether (Araldite^{®} GY 250, von Huntsman) zugegeben, wobei die Temperatur der Reaktionsmischung während einer Stunde zwischen 70 und 90 °C gehalten wurde. Erhalten wurde eine klare, leicht gelbliche Flüssigkeit.

### Herstellung von Klebstoffen und Verklebungen:

### Beispiele 1 bis 12:

Für jedes Beispiel wurde eine Harz-Komponente **(Harz-Komp.)** hergestellt, indem die in den Tabellen 1 und 2 angegebenen Inhaltsstoffe der Harz-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt wurden.

Weiterhin wurde für jedes Beispiel eine Härter-Komponente **(Härter-Komp.)** hergestellt, indem die in den Tabellen 1 und 2 angegebenen Inhaltsstoffe der Härter-Komponente in den angegebenen Mengen (in Gewichtsteilen) mittels des Zentrifugalmischers vermischt und unter Ausschluss von Feuchtigkeit aufbewahrt wurden.

Für jedes Beispiel wurden dann die Harz-Komponente und die Härter-Komponente mittels des Zentrifugalmischers zu einer homogenen Paste verarbeitet und diese unverzüglich folgendermassen geprüft:
Die Schälfestigkeit **(T-Peel)** wurde bestimmt, indem zwei Membran-Streifen (Sikaplan^{®} WP 2110-21 HL, Abdichtungsmembran für den Tunnelbau aus Weich-PVC, von Sika) von 50 x 200 mm auf einer Fläche von 50 x 150 mm und einer Klebstoff-Dicke von 2 mm so verklebt wurden, dass die beiden schwarzen Seiten miteinander verklebt waren. Zur Prüfung wurden die Verbundkörper gemäss DIN EN 14173 mit einer Zuggeschwindigkeit von 100 mm/min im Winkel von 180° auseinandergezogen und die Festigkeit auf den mittleren 100 mm ausgewertet. Die Schälfestigkeit wurde bestimmt nach 7 Tagen Aushärtung im Normklima **(7d NK),** sowie nach zusätzlicher Lagerung während 28 Tagen bei 70 °C und 100% relativer Feuchtigkeit (= Kataplasma) gefolgt von 3 Tagen im Normklima **(+ 28d 70/100).**

Zur Bestimmung der **Zugfestigkeit** des Klebstoffs wurde der gemischte Klebstoff im Normklima in eine Silikonform zu hantelförmigen Prüfkörpern mit einer Dicke von 10 mm, einer Länge von 150 mm, bei einer Steglänge von 80 mm und einer Stegbreite von 10 mm, appliziert, nach 7 Tagen aus der Form gelöst und die Zugfestigtkeit gemäss EN ISO 527 bei einer Zuggeschwindigkeit von 1 mm/min bestimmt.

Die Resultate sind in den Tabellen 1 und 2 angegeben.

Mit **"(Ref.)"** bezeichnete Beispiele sind Vergleichsbeispiele.

Aus der Tabelle 1 ist ersichtlich, dass ein Klebstoff ohne DMAPAPA (= Amin **A1) (Beispiel 1 (Ref.))** und ein Klebstoff mit zu geringem Gehalt an DMAPAPA **(Beispiel 2 (Ref.))** eine ungenügende Schälfestigkeit bzw. Haftung zeigen. Die **Beispiele 3** und **4** mit erfindungsgemässem Gehalt an DMAPAPA zeigen mit Werten für die Schälfestigkeit von mehr als 1 MPa eine gute bis sehr gute Haftung auf Weich-PVC, auch nach einer Lagerung der Verklebung während 4 Wochen in feucht-warmen Klima. Der Klebstoff aus **Beispiel 5 (Ref.)** mit zu hohem Gehalt an DMAPAPA zeigt zwar nach Aushärtung im Normklima eine sehr gute Haftung auf Weich-PVC, nach einer Lagerung der Verklebung während 4 Wochen in feucht-warmen Klima ist die Schälfestigkeit bzw. Haftung aber ungenügend. Die Verklebung weist eine ungenügende Wasserbeständigkeit auf.

**Tabelle 1: Zusammensetzung und Eigenschaften der Beispiele 1 bis 8. "n.b." steht für "nicht bestimmt".**

| **Beispiel** | | **1 (Ref.)** | **2 (Ref.)** | **3** | **4** | **5 (Ref.)** | **6** | **7** | **8** |
|---|---|---|---|---|---|---|---|---|---|
| | **Harz-Komp.** | | | | | | | | |
| | BADGE | 41.0 | 41.0 | 41.0 | 41.0 | 41.0 | 41.0 | 41.0 | 41.0 |
| | BD-DGE | 7.0 | 7.0 | 7.0 | 7.0 | 7.0 | 7.0 | 7.0 | 7.0 |
| | Quarzmehl | 20.0 | 20.0 | 20.0 | 20.0 | 20.0 | 20.0 | 20.0 | 20.0 |
| | Quarzsand | 116.0 | 116.0 | 116.0 | 116.0 | 116.0 | 116.0 | 116.0 | 116.0 |
| | coated CaCO₃ | 16.0 | 16.0 | 16.0 | 16.0 | 16.0 | 16.0 | 16.0 | 16.0 |
| | **Härter-Komp.** | | | | | | | | |
| | DMAPAPA | - | 2.0 | 4.0 | 6.0 | 10.0 | 6.0 | 6.0 | 6.0 |
| | IPDA | 9.0 | 8.0 | 6.5 | 5.0 | 2.0 | 2.3 | 3.8 | 3.4 |
| | LITE 3025 | 7.0 | 5.0 | 5.0 | 5.0 | 4.0 | - | - | 4.5 |
| | Addukt-1 | - | - | - | - | - | 12.7 | 8.5 | 4.5 |
| | Benzylalkohol | 5.0 | 6.0 | 5.5 | 5.0 | 5.0 | - | 2.7 | 2.6 |
| | Quarzmehl | 37.0 | 37.0 | 37.0 | 37.0 | 37.0 | 37.0 | 37.0 | 37.0 |
| | Quarzsand | 25.5 | 25.5 | 25.5 | 25.5 | 25.5 | 25.5 | 25.5 | 25.5 |
| | coated CaCO₃ | 16.5 | 16.5 | 16.5 | 16.5 | 16.5 | 16.5 | 16.5 | 16.5 |
| Gehalt Amin **A1** ¹ | | - | 9.5 % | 19.1 % | 28.6 % | 47.6 % | 28.6 % | 28.6 % | 28.6 % |
| Anteil AH aus **A1** ² | | - | 13.8 % | 27.3 % | 40.6 % | 68.8 % | 41 % | 41 % | 41 % |
| Gehalt Verdünner3 | | 7.8 | 9.5 | 8.7 | 7.8 | 7.8 | 0 | 4.1 | 3.9 |
| | **T-Peel** ⁴ [N/mm] | | | | | | | | |
| | (7d NK) | 0 | 0.1 | 1.2 | 7.5 | 8.8 | 3.1 | 3.1 | 7.2 |
| | (+ 28d 70/100) | 0 | 0.4 | 1.1 | 2.0 | 0.7 | 2.3 | 2.3 | 2.4 |
| **Zugfestigkeit** ⁵ | | | | | | | | | |
| [MPa] (7d NK) | | 30 | n.b. | 31 | 28 | n.b. | 24 | 23 | 28 |

| | | | | | | | | | |
|---|---|---|---|---|---|---|---|---|---|
| ¹ Gehalt an Amin **A1** bezogen auf die Summe der flüssigen Bestandteile der Härter-Komponente in Gewichts-% ²Anteil der Aminwasserstoff-Equivalente aus Amin **A1** bezogen auf die gesamte Anzahl Aminwasserstoff-Equivalente in der Härter-Komponente ³ Gewichtsteile Verdünner pro 100 Gewichtsteile Epoxide und Amine ⁴ Verklebung von Weich-PVC mit Weich-PVC ⁵ des Klebstoffs | | | | | | | | | |

**Tabelle 2: Zusammensetzung und Eigenschaften der Beispiele 9 bis 12.**

| **Beispiel** | | **9** | **10** | **11** | **12** |
|---|---|---|---|---|---|
| | **Harz-Komp.** | | | | |
| | BADGE | 41.2 | 41.2 | 41.2 | 41.2 |
| | DY-E | 3.8 | 3.8 | 3.8 | 3.8 |
| | Rütasolv^{®} BP M | 3.2 | 3.2 | 3.2 | 3.2 |
| | Quarzmehl | 20.0 | 20.0 | 20.0 | 20.0 |
| | Quarzsand | 115.8 | 115.8 | 115.8 | 115.8 |
| | coated CaCO₃ | 16.0 | 16.0 | 16.0 | 16.0 |
| | **Härter-Komp.** | | | | |
| | DMAPAPA | 6.0 | 4.0 | - | - |
| | DMAPA | - | 1.0 | 4.0 | - |
| | DMAP-MXDA | - | - | - | 6.5 |
| | IPDA | 3.0 | 3.0 | 4.0 | 4.5 |
| | LITE 3025 | 5.0 | 7.0 | 5.0 | 4.0 |
| | Benzylalkohol | 7.0 | 6.0 | 8.0 | 6.0 |
| | Quarzmehl | 37.0 | 37.0 | 37.0 | 37.0 |
| | Quarzsand | 25.5 | 25.5 | 25.5 | 25.5 |
| | coated CaCO₃ | 16.5 | 16.5 | 16.5 | 16.5 |
| Gehalt Amin **A1** ¹ | | 28.6 % | 23.8 % | 19.3 % | 31.0 % |
| Anteil AH aus **A1** ² | | 48.8 % | 40.7 % | 35.5 % | 37.9 % |
| Gehalt Verdünner ³ | | 17.3 | 15.3 | 19.3 | 15.4 |
| | **T-Peel** ⁴ [N/mm] | | | | |
| | (7d NK) | 6.3 | 8.0 | 5.2 | 2.5 |
| | (+ 28d 70/100) | 2.2 | 2.3 | 1.7 | 1.6 |

| | | | | | |
|---|---|---|---|---|---|
| ¹ Gehalt an Amin **A1** bezogen auf die Summe der flüssigen Bestandteile der Härter-Komponente in Gewichts-% ²Anteil der Aminwasserstoff-Equivalente aus Amin **A1** bezogen auf die gesamte Anzahl Aminwasserstoff-Equivalente in der Härter-Komponente ³ Gewichtsteile Verdünner pro 100 Gewichtsteile Epoxide und Amine ⁴ Verklebung von Weich-PVC mit Weich-PVC | | | | | |

Mit den Klebstoffen aus den Beispielen **4** und/oder **9** wurden weitere Prüfungen wie nachfolgend beschrieben durchgeführt:
Die Schälfestigkeit **(T-Peel)** wurde mit weiteren Membranen aus Weich-PVC wie in der Tabelle 3 angegeben bestimmt wie vorgängig beschrieben. Dabei wurde teilweise auch die Schälfestigkeit nach 7 Tagen im Normklima gefolgt von 28 Tagen eingetaucht in deionisiertem Wasser bei Raumtemperatur gefolgt von 3 Tagen im Normklima geprüft **(+ 28d H₂O).**

Die **Zugscherfestigkeit** wurde auf Hart-PVC geprüft. Dazu wurden Verbundkörper hergestellt, indem zwei unbehandelte Platten aus Hart-PVC so verklebt wurden, dass die überlappende Klebeverbindung eine Dimension von 12 x 25 mm und eine Dicke von 2 mm aufwies und die Platten an den Kopfenden vorstanden. Nach einer Lagerung der Verbundkörper während 7 Tagen im Normklima wurde die Zugscherfestigkeit nach DIN EN 1465 bei einer Zuggeschwindigkeit von 20 mm/min geprüft.

Die Schälfestigkeit **(T-Peel)** wurde zusätzlich auf trockenem bzw. feuchtem **Beton** bestimmt. Dazu wurde eine Gartenplatte aus Beton in trockenem Zustand im Normklima bereitgestellt. Eine weitere Gartenplatte wurde während 24 h in Leitungswasser eingelegt und anschliessend mit einem Tuch trockengetupft (= feuchter Beton). Auf diese Betonoberflächen wurden jeweis drei Membran-Streifen (Sikaplan^{®} WP 2110-21 HL, Abdichtungsmembran für den Tunnelbau aus Weich-PVC, von Sika) von 50 x 200 mm auf einer Fläche von 50 x 150 mm mit einer Klebstoff-Dicke von 2 mm aufgeklebt. Nach 7 Tagen Aushärtung im Normklima wurde die aufgeklebte Membran in Anlehnung an DIN EN 14173 in einem Winkel von 90° mit einer Zuggeschwindigkeit von 100 mm/min von der Betonoberfläche weggezogen und die Schälfestigkeit auf den mittleren 100 mm ausgewertet.

Die Schälfestigkeit **(T-Peel)** wurde zusätzlich auf einem **Kynar^{®} Metall** bestimmt. Dazu wurden drei Membran-Streifen von 50 x 200 mm (Sarnafil^{®} S 327-15 EL, Membran für die Dachabdichtung aus Weich-PVC, von Sika) auf einer Fläche von 50 x 150 mm mit einer Klebstoff-Dicke von 2 mm ohne Vorbehandlung auf ein mit Polyvinylidenfluorid (Kynar^{®} 500 von Arkema) beschichtetes Aluminiumblech aufgeklebt. Nach 7 Tagen Aushärtung im Normklima wurde die aufgeklebte Membran in Anlehnung an DIN EN 14173 in einem Winkel von 90° mit einer Zuggeschwindigkeit von 100 mm/min von der Betonoberfläche weggezogen und die Schälfestigkeit auf den mittleren 100 mm ausgewertet.

Die Resultate sind in Tabelle 3 angegeben.

**Tabelle 3: zusätzliche Eigenschaften der Beispiele 4 und/oder 9. "n.b." steht für "nicht bestimmt"**

| **Beispiel** | | **4** | **9** |
|---|---|---|---|
| **T-Peel** mit Sarnafil^{®} G 410-15 EL ¹ | | | |
| [N/mm] | (7d NK) | 4.5 | 6.4 |
| | (+ 28d H₂O) | n.b. | 4.4 |
| | (+ 28d 70/100) | 3.0 | 1.8 |
| **T-Peel** mit Sarnafil^{®} S 327-15 EL ¹ | | | |
| [N/mm] | (7d NK) | 7.2 | 6.1 |
| | (+ 28d H₂O) | n.b. | 4.1 |
| | (+ 28d 70/100) | 7.1 | 1.4 |
| **T-Peel** mit Sikaplan^{®} G-15 ¹ | | | |
| [N/mm] | (7d NK) | n.b. | 1.1 |
| | (+ 28d H₂O) | n.b. | n.b. |
| | (+ 28d 70/100) | n.b. | 1.0 |
| **Zugscherfestigkeit** (Hart-PVC) | | | |
| [MPa] | (7d NK) | n.b. | 19.4 |
| **T-Peel** ² auf trockenem Beton | | | |
| [N/mm] | (7d NK) | 12.3 | n.b. |
| **T-Peel** ² auf feuchtem Beton | | | |
| [N/mm] | (7d NK) | 10.5 | n.b. |
| **T-Peel** ³ auf Kynar^{®} Metall | | | |
| [N/mm] | (7d NK) | 8.4 | n.b. |

| | | | |
|---|---|---|---|
| ¹ Verklebung einer Membran für die Dachabdichtung aus Weich-PVC, von Sika, Oberseite mit Unterseite, jeweils ohne Vorbehandlung ² Verklebung einer Membran aus Weich-PVC auf Beton ³ Verklebung einer Membran aus Weich-PVC auf Kynar^{®} Metall | | | |

## Patentansprüche

1. Verwendung eines Klebstoffs zum Verkleben einer Membran aus Weich-PVC mit einem weiteren Substrat, **dadurch gekennzeichnet, dass** der Klebstoff
- eine Harz-Komponente enthaltend mindestens ein Epoxidharz und
- eine Härter-Komponente enthaltend
(a) mindestens ein Amin **A1** mit mindestens einer Dimethylaminogruppe und mindestens einem Aminwasserstoff, und
(b) mindestens ein weiteres Amin **A2** mit mindestens drei Aminwasserstoffen, welches frei ist von Dimethylaminogruppen,
umfasst, wobei die Härter-Komponente bezogen auf die Summe aller in der Härter-Komponente enthaltenen flüssigen oder gelösten Bestandteile einen Gehalt an Aminen **A1** von 10 bis 45 Gewichts-%, bevorzugt 15 bis 40 Gewichts-%, aufweist.

2. Verwendung gemäss Anspruch 1, **dadurch gekennzeichnet, dass** die Harz-Komponente mindestens ein aromatisches Epoxid-Flüssigharz enthält.

3. Verwendung gemäss einem der Ansprüche 1 oder 2, **dadurch gekennzeichnet, dass** das Amin **A1** ausgewählt ist aus der Gruppe bestehend aus 2-Dimethylaminoethylamin, 3-Dimethylaminopropylamin, 4-Dimethylaminobutylamin, 6-Dimethylaminohexylamin, 2-(2-Dimethylaminoethylamino)ethylamin, 2-(3-Dimethylaminopropylamino)ethylamin, 3-(2-Dimethylaminoethylamino)propylamin, 3-(3-Dimethylaminopropylamino)propylamin, N-(3-Dimethylaminopropyl)-1,3-bis-(aminomethyl)benzol, N-(3-Dimethylaminopropyl)-1,4-bis(aminomethyl)benzol, 2,4,6-Tris(4-dimethylamino-2-azabutyl)phenol, Bis(2-dimethylaminoethyl)amin, Bis(3-dimethylaminopropyl)amin und Bis(6-dimethylaminohexyl)amin, insbesondere 3-(3-Dimethylaminopropylamino)propylamin.

4. Verwendung gemäss einem der Ansprüche 1 bis 3, **dadurch gekennzeichnet, dass** die Anzahl Aminwasserstoff-Equivalente aus Aminen **A1** bezogen auf die gesamte Anzahl Aminwasserstoff-Equivalente in der Härter-Komponente im Bereich von 20 bis 60 %, bevorzugt 25 bis 55 %, liegt.

5. Verwendung gemäss einem der Ansprüche 1 bis 4, **dadurch gekennzeichnet, dass** das Amin **A2** ausgewählt ist aus der Gruppe bestehend aus 1,5-Diamino-2-methylpentan, 1,6-Hexandiamin, 2,2(4),4-Trimethyl-1,6-hexandiamin, 2-Butyl-2-ethyl-1,5-pentandiamin, Isophorondiamin, 1,3-Bis(aminomethyl)benzol, 1,4-Bis(aminomethyl)benzol, 2,5-Bis(aminomethyl)furan, 2,5-Bis(aminomethyl)-tetrahydrofuran, 1,3-Bis(aminomethyl)cyclohexan, 1,4-Bis(aminomethyl)cyclohexan, Bis(4-aminocyclohexyl)methan, 1,2-Diaminocyclohexan, 1,3-Diaminocyclohexan, 1,4-Diaminocyclohexan, 2(4)-Methyl-1,3-diaminocyclohexan, 2,5(2,6)-Bis(aminomethyl)bicyclo[2.2.1]heptan, N-Benzyl-1,2-ethandiamin, N-Furfuryl-1,2-ethandiamin, N-Tetrahydrofurfuryl-1,2-ethandiamin, Diethylentriamin, Triethylentetramin, Tetraethylenpentamin, Dipropylentriamin, N-(2-Aminoethyl)-1,3-propandiamin, N,N'-Bis(3-aminopropyl)ethylendiamin, Bis(1,6-hexylen)triamin, Phenalkaminen, Phenalkamiden, Polyamidoaminen, aminfunktionellen Addukten der genannten Amine mit Epoxiden, und Kombinationen aus zwei oder mehr dieser Amine.

6. Verwendung gemäss einem der Ansprüche 1 bis 5, **dadurch gekennzeichnet, dass** als Amin **A2** mindestens ein Amin **A2-1** mit einem Aminwasserstoff-Equivalentgewicht von mindestens 80 g/eq, bevorzugt mindestens 90 g/eq, enthalten ist, insbesondere ein Phenalkamin oder Phenalkamid oder ein aminfunktionelles Addukt von N-Benzyl-1,2-ethandiamin mit mindestens einem Polyepoxid, insbesondere einem aromatischen Epoxid-Flüssigharz.

7. Verwendung gemäss Anspruch 6, **dadurch gekennzeichnet, dass** als Amin **A2** eine Kombination aus mindestens einem Amin **A2-1** und mindestens einem Amin **A2-2** mit zwei primären Aminogruppen und vier Aminwasserstoffen enthalten ist, wobei das Amin **A2-2** bevorzugt ausgewählt ist aus Isophorondiamin, 1,3-Bis(aminomethyl)benzol, 1,3-Bis(aminomethyl)cyclohexan, 1,2-Diaminocyclohexan und 2(4)-Methyl-1,3-diaminocyclohexan.

8. Verwendung gemäss einem der Ansprüche 1 bis 7, **dadurch gekennzeichnet, dass** die Härter-Komponente eine Kombination aus 3-(3-Dimethylaminopropylamino)propylamin, Isophorondiamin und mindestens einem Amin ausgewählt aus Phenalkaminen, Phenalkamiden und aminfunktionellen Addukten von N-Benzyl-1,2-ethandiamin mit mindestens einem aromatischen Epoxid-Flüssigharz enthält.

9. Verwendung gemäss einem der Ansprüche 1 bis 8, **dadurch gekennzeichnet, dass** der Klebstoff mindestens einen weiteren Inhaltsstoff ausgewählt aus Verdünnern, Füllstoffen, Beschleunigern und oberflächenaktiven Verbindungen enthält.

10. Verwendung gemäss einem der Ansprüche 1 bis 9, **dadurch gekennzeichnet, dass** der Klebstoff bezogen auf 100 Gewichtsteile der Summe aller Epoxid- und Amingruppen-haltigen Bestandteile höchstens 30 Gewichtsteile, bevorzugt höchstens 20 Gewichtsteile, besonders bevorzugt höchstens 10 Gewichtsteile, insbesondere höchstens 5 Gewichtsteile, Verdünner enthält.

11. Verwendung gemäss einem der Ansprüche 1 bis 10, **dadurch gekennzeichnet, dass** der Klebstoff bezogen auf den gesamten Klebstoff 60 bis 90 Gewichts-%, insbesondere 70 bis 85 Gewichts-%, mineralische Füllstoffe enthält.

12. Verwendung gemäss einem der Ansprüche 1 bis 11, **dadurch gekennzeichnet, dass** der Klebstoff bezogen auf den gesamten Klebstoff
- 10 bis 20 Gewichts-% aromatische Epoxid-Flüssigharze,
- 1 bis 4 Gewichts-% Epoxidgruppen-haltige Reaktivverdünner,
- 3-(3-Dimethylaminopropylamino)propylamin,
- Isophorondiamin,
- mindestens ein Amin **A2-1** mit einem Aminwasserstoff-Equivalentgewicht von mindestens 80 g/eq,
- 60 bis 90 Gewichts-% mineralische Füllstoffe
und gegebenenfalls weitere Inhaltsstoffe enthält.

13. Verwendung gemäss einem der Ansprüche 1 bis 12, **dadurch gekennzeichnet, dass** das weitere Substrat ausgewählt ist aus Weich-PVC, Polyolefin, modifiziertem Polyethylen, Beton, Mörtel, Zementestrich, Faserzement, Backstein, Ziegel, Naturstein, Stahl, mit Polyvinylidenfluorid beschichteten Metallen und weiteren Kunststoffen.

14. Klebeverbund erhalten aus der Verwendung gemäss einem der Ansprüche 1 bis 13.

15. Klebeverbund gemäss Anspruch 14, **dadurch gekennzeichnet, dass** der Wert für die Schälfestigkeit jeweils mindestens 1 N/mm beträgt, bestimmt sowohl nach a) 7 Tagen Aushärtung im Normklima, als auch nach b) 7 Tagen Aushärtung im Normklima gefolgt von 28 Tagen Lagerung bei 70 °C und 100 % relativer Feuchtigkeit gefolgt von 3 Tagen Lagerung im Normklima, wobei für den Fall, dass die Membran aus Weich-PVC mit einer weiteren Membran verklebt ist, die Bestimmung der Schälfestigkeit gemäss DIN EN 14173 bei einer Zuggeschwindigkeit von 100 mm/min erfolgt, und wobei für den Fall, dass die Membran aus Weich-PVC mit einer festen Oberfläche verklebt ist, die Bestimmung der Schälfestigkeit in Anlehnung an DIN EN 14173 bei einer Zuggeschwindigkeit von 100 mm/min mit einem Zugwinkel von 90° zwischen der Membran aus Weich-PVC und der festen Oberfläche erfolgt.
